# EUROPÄISCHE PATENTANMELDUNG

(11) **EP 0 843 433 A2**
(43) Veröffentlichungstag der Anmeldung: **20.05.1998**
(21) Anmeldenummer: 97119871.8
(22) Anmeldetag: 13.11.1997
(51) Int. Cl.: H04J 3/16, H04N 7/22, H04J 4/00

(54) **Verfahren zur bidirektionalen Datenübertragung**

(30) Priorität: 19.11.1996 DE 19647764
(71) Anmelder: ROBERT BOSCH GMBH, 70442 Stuttgart (DE)
(72) Erfinder: Mahn, Hendrick, 31139 Hildesheim (DE); Vollmer, Jens, 30159 Hannover (DE)

(57) **Zusammenfassung**

Es wird ein Verfahren vorgeschlagen, das zur bidirektionalen Datenübertragung auf einer Breitbandkabelanlage (1) zwischen einer Kopfstelle (5) und mehreren Teilnehmereinrichtungen (10) dient. Dabei werden die Daten in Vorwärtsrichtung von der Kopfstelle (5) zu den Teilnehmereinrichtungen (10) in mindestens einem ersten Frequenzbereich (15) und in Rückwärtsrichtung von den Teilnehmereinrichtungen (10) zur Kopfstelle (5) in mindestens einem zweiten Frequenzbereich (20) in Paketen zeitmultiplex übertragen. Die Pakete werden zu Rahmen (25) zusammengefaßt übertragen. Jedem Rahmen (25) wird ein Synchronisationspaket (30) zur Kennzeichnung des Rahmenanfangs vorangestellt. In Vorwärtsrichtung werden Steuerdaten in Steuerdatenpaketen (35) übertragen, die Informationen über die den entsprechenden Teilnehmereinrichtungen (10) zugewiesenen Zeitschlitze und/oder über für die Übertragung in Rückwärtsrichtung von den Teilnehmereinrichtungen (10) einzustellende Zeitverzögerungen enthalten.

## Beschreibung

### Stand der Technik

Die Erfindung geht von einem Verfahren zur bidirektionalen Datenübertragung nach der Gattung des Hauptanspruchs aus.

Aus der noch nicht vorveröffentlichten deutschen Patentanmeldung mit dem Aktenzeichen 1 95 48 159 ist ein Verfahren zum Betreiben eines Telefonnetzes und eine digitale Telefonanlage zur Modulation der auf einer Telefonleitung ankommenden Daten auf einen Hochfrequenzträger, der in einem freien Bereich eines rückkanalfähigen Breitbandkabels liegt und in dieses eingespeist wird, bekannt. Dabei findet auf dem rückkanalfähigen Breitbandkabel ein Datenaustausch zwischen Funkanlagen und der digitalen Telefonanlage statt.

### Vorteile der Erfindung

Das erfindungsgemäße Verfahren mit den Merkmalen des Hauptanspruchs hat demgegenüber den Vorteil, daß die Daten auf der Breitbandkabelanlage in Vorwärtsrichtung von der Kopfstelle zu den Teilnehmereinrichtungen in mindestens einem ersten Frequenzbereich und in Rückwärtsrichtung von den Teilnehmereinrichtungen zur Kopfstelle in mindestens einem zweiten Frequenzbereich in Paketen zeitmultiplex übertragen werden. Auf diese Weise bietet das Verfahren eine einfache, flexible und effiziente Möglichkeit, auf Kabelnetzen bidirektionale Verbindungen einzurichten und zu betreiben. Damit ist es möglich, ohne die Nutzung weiterer Infrastrukturen, wie beispielsweise eines Telefonnetzes, interaktive Dienste, wie beispielsweise Video on demand, Homeshopping oder dergleichen und Kommunikationsdienste, wie beispielsweise Telefon, ISDN oder dergleichen auf bereits bestehenden Kabelnetzen zu installieren und gewünschte Datenraten flexibel zuzuweisen. Dadurch werden außerdem Aufwand und Kosten eingespart.

Ein weiterer Vorteil besteht darin, daß auf der Breitbandkabelanlage eine hohe Datenkapazität für den Rückkanal zur Verfügung steht.

Durch die in den Unteransprüchen aufgeführten Maßnahmen sind vorteilhafte Weiterbildungen und Verbesserungen des im Hauptanspruch angegebenen Verfahrens möglich.

Vorteilhaft ist die Zusammenfassung der Pakete zu Rahmen und das Voranstellen eines Synchronisationspaketes in jedem Rahmen zur Kennzeichnung des Rahmenanfangs. Auf diese Weise wird eine Synchronisation der bidirektionalen Datenübertragung auf der Breitbandkabelanlage erreicht, so daß eine einfache und effiziente Organisation der bidirektionalen Datenübertragung erreicht wird.

Besonders vorteilhaft ist die Übertragung von Steuerdaten in Steuerdatenpaketen von der Kopfstelle zu den Teilnehmereinrichtungen, wobei die Steuerdatenpakete Steuerdateninformationen über die den entsprechenden Teilnehmereinrichtungen zugewiesenen Zeitschlitze und/oder über für die Übertragung in Rückwärtsrichtung von den Teilnehmereinrichtungen einzustellende Zeitverzögerungen enthalten. Auf diese Weise wird die Synchronisation wesentlich verbessert, da die Pakete der einzelnen Teilnehmer durch den Laufzeitausgleich ohne großen Jitter an der Kopfstelle eintreffen.

Vorteilhaft ist weiterhin, daß für den ersten und den zweiten Frequenzbereich jeweils mindestens ein 7 MHz - Kanal verwendet wird und daß in den beiden Frequenzbereichen jeweils 64 QAM modulierte Signale übertragen werden. Auf diese Weise ist eine besonders günstige Realisierbarkeit gegeben, da das für Fernsehübertragung bestehende Kanalraster und die damit verbundene hohe Datenrate von mehr als 35 MBit/s pro Kanal genutzt werden kann.

Vorteilhaft ist auch, daß zwischen der Kopfstelle und mindestens einer Teilnehmereinrichtung Nutzkanäle, insbesondere mit einer Datenrate von 64 kBit/s und mindestens ein Signalisierungskanal, insbesondere mit einer Datenrate von 16 kBits/s eingerichtet werden. Auf diese Weise lassen sich die für den Transport von Informationen und Signalisierungsdaten im ISDN erforderlichen B- und D-Kanäle realisieren.

### Zeichnung

Ein Ausführungsbeispiel der Erfindung ist in der Zeichnung dargestellt und in der nachfolgenden Beschreibung näher erläutert. Es zeigen Figur 1 einen Rahmenaufbau für die bidirektionale Datenübertragung, Figur 2 ein Blockschaltbild für eine Kopfstelle, Figur 3 ein Blockschaltbild für eine Teilnehmereinrichtung und Figur 4 einen Frequenzplan für die bidirektionale Datenübertragung.

### Beschreibung des Ausführungsbeispiels

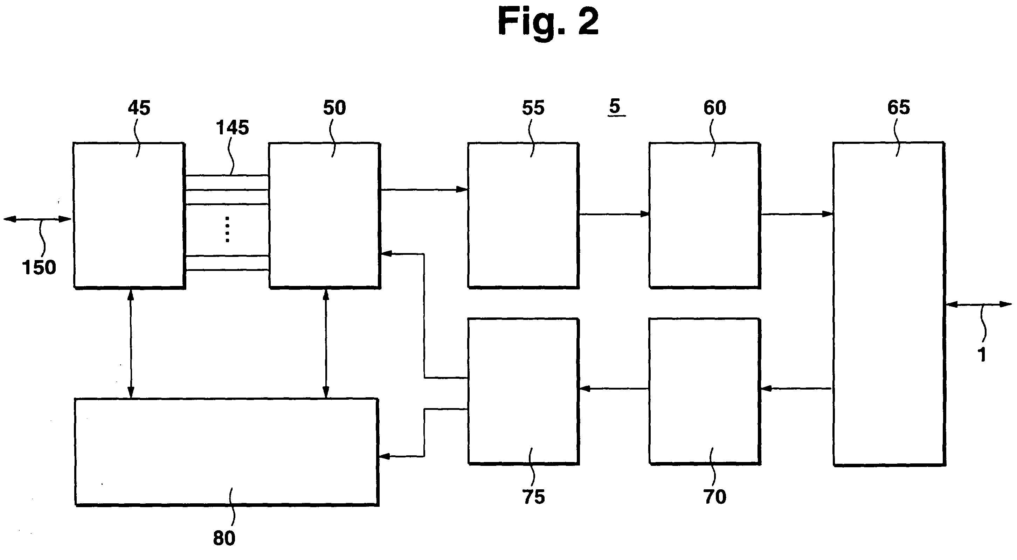

Figur 2 zeigt das Blockschaltbild einer Kopfstelle 5. Dabei kennzeichnet 45 eine optische Netzwerkeinheit, der ein Lichtwellenleiter 150 zugeführt ist und die über 400 Datenkanäle 145 mit einer Multiplex-/Demultiplexeinheit 50 verbunden ist. An die Multiplex-/Demultiplexeinheit 50 ist eine Kanalanpassungs- und Modulationseinheit 55 angeschlossen, die mit einem Frequenzumsetzer 60 verbunden ist. Über einen ersten Koppler 65 ist der Frequenzumsetzer 60 mit einer Breitbandkabelanlage 1 verbunden. Der erste Koppler 65 ist außerdem über eine Frequenzumsetzungs- und Synchronisationseinheit 70 mit einer QAM-Empfangs- und Laufzeitmessungseinheit 75 verbunden. An die QAM-Empfangsund Laufzeitmessungseinheit 75 ist zum einen die Multiplex-/Demultiplexeinheit 50 und zum andern eine erste Zeitschlitzzuweisungs- und Laufzeitkorrektureinheit 80 angeschlossen, die mit der optischen Netzwerkeinheit 45 und mit der Multiplex-/Demultiplexeinheit 50 verbunden ist.

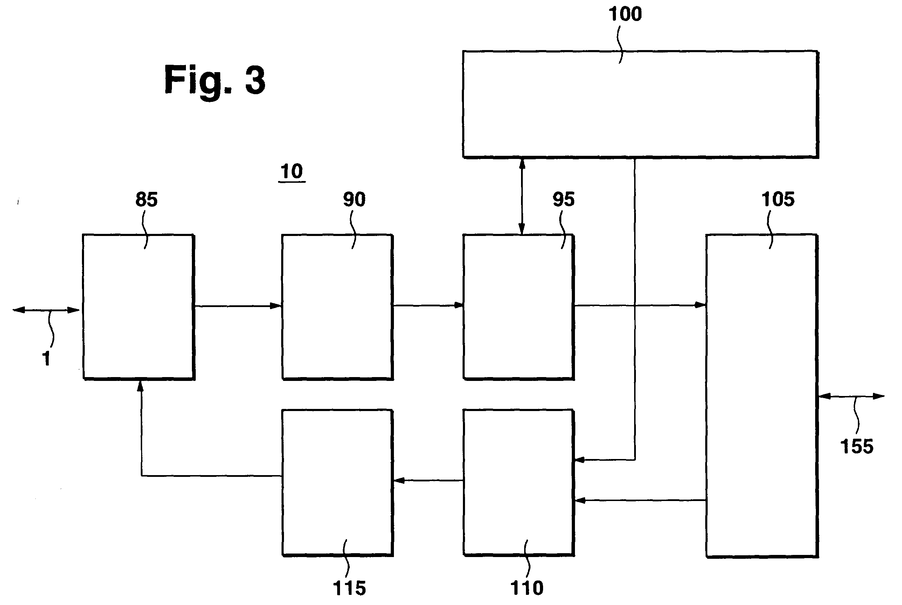

In Figur 3 ist das Blockschaltbild einer Teilnehmereinrichtung 10 dargestellt. Dabei kennzeichnet 85 einen zweiten Koppler, über den eine QAM-Empfangseinheit 90 mit der Breitbandkabelanlage 1 verbunden ist. An die QAM-Empfangseinheit 90 ist ein Kanal-Decoder 95 angeschlossen. Der Kanal-Decoder 95 ist mit einer zweiten Zeitschlitzzuweisungs- und Laufzeitkorrektureinheit 100 und mit einer Endgeräteschnittstelle 105 verbunden. An die Endgeräteschnittstelle 105 ist über eine Leitung 155 ein in Figur 3 nicht dargestelltes Endgerät angeschlossen. Die Endgeräteschnittstelle 105 ist außerdem genauso wie die zweite Zeitschlitzzuweisungs- und Laufzeitkorrektureinheit 100 mit einer Kanalanpassungs- und Laufzeitkorrektureinheit 110 verbunden, an die ein QAM-Modulator 115 angeschlossen ist. Der QAM-Modulator 115 ist an den zweiten Koppler 85 angeschlossen.

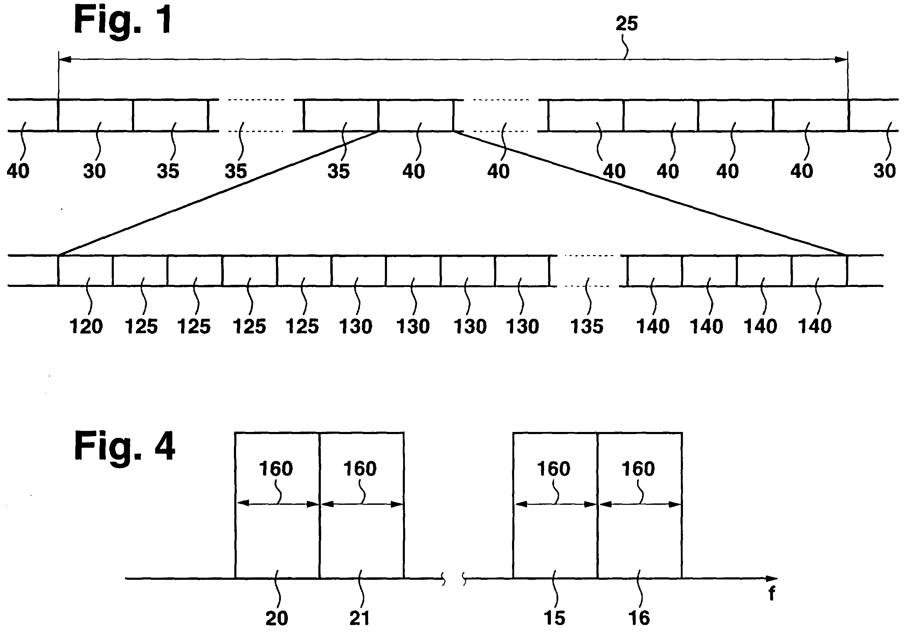

In Figur 1 ist ein Rahmenaufbau für die bidirektionale Datenübertragung dargestellt. Ein Rahmen 25 ist dabei in 450 Zeitschlitze eingeteilt, wobei in jedem Zeitschlitz ein Datenpaket übertragen wird. Dem Rahmen 25 ist ein Synchronisationspaket 30 vorangestellt, dem 17 Steuerdatenpakete 35 folgen. An die 17 Steuerdatenpakete 35 schließen sich 432 Nutzdatenpakete 40 an. An das letzte Nutzdatenpaket 40 des Rahmens 25 schließt sich dann das Synchronisationspaket 30 des nächsten Rahmens an. Dem synchronisationspaket 30 des Rahmens 25 ist das letzte Nutzdatenpaket 40 des vorhergehenden Rahmens vorangestellt. Die Rahmen sind somit ohne zeitliche Unterbrechung aneinandergefügt.

Ein Nutzdatenpaket 40 ist wie folgt aufgebaut:

Dem Nutzdatenpaket 40 ist ein Synchronisationssymbol 120 vorangestellt, dem vier Adreßsymbole 125 folgen. Nach den vier Adreßsymbolen 125 folgen vier Zählersymbole 130. Anschließend sind in das Nutzdatenpaket 40 295 Nutzdatensymbole 135 eingefügt. Den Nutzdatenssymbolen 135 folgen 16 Korrekturssymbole 140, von denen die letzen vier in Figur 1 dargestellt sind. Auf diese Weise ist das Nutzdatenpaket 40 in 320 Symbole eingeteilt. Bei einer Datenübertragung nach dem 64 QAM-Verfahren umfaßt ein Symbol 6 Bit, so daß in einem Nutzdatenpaket 40 1920 Bit übertragen werden. Pro Rahmen 25 ergibt dies eine Übertragung von 843,75 kBit, so daß bei einer Rahmenlänge von 24 ms eine Datenrate von 36 MBit/s resultiert.

Aus der vom Lichtwellenleiter 150 gespeisten optischen Netzwerkeinheit 45 werden Nutz- und Steuerdaten zur Multiplex-/Demultiplex-Einheit 50 übertragen. In der Multiplex-/Demultiplex-Einheit 50 werden die entsprechenden Datenkanäle zusammengefaßt und an die Kanalanpassungs- und Modulationseinheit 55 weitergeleitet. Die Zusammenfassung der entsprechenden Kanäle erfolgt dabei zeitmultiplex in Zeitschlitze von Rahmen 25 mit einer Struktur gemäß Figur 1. Dabei wird jedem Rahmen 25 ein Synchronisationspaket 30 vorangestellt, damit der Rahmenanfang zur Synchronisation der Übertragung in den Teilnehmereinrichtungen 10 bzw. in der Kopfstelle 5 detektiert werden kann. Die Steuerdatenpakete werden von der ersten Zeitschlitzzuweisungs- und Laufzeitkorrektureinheit 80 erzeugt und nach dem Synchronisationspaket 30 in den Rahmen 25 eingefügt. Sie dienen zur Realisierung des Verbindungsaufbaus zwischen der Kopfstelle 5 und den Teilnehmereinrichtungen 10. Die von der optischen Netzwerkeinheit 45 kommenden Nutzdaten der entsprechenden Datenkanäle 145 werden auf die Nutzdatenpakete des Rahmens 25 verteilt, wobei während einer Verbindung zwischen der Kopfstelle 5 und einer Teilnehmereinrichtung 10 sowohl in Vorwärtsrichtung von der Kopfstelle 5 zu den Teilnehmereinrichtungen 10 als auch in Rückwärtsrichtung von den Teilnehmereinrichtungen 10 zur Kopfstelle 5 jeweils das gleiche Paket bzw. der gleiche Zeitschlitz der für die Verbindung benötigten Rahmen 25 verwendet wird. Analog zur Einteilung des Rahmens 25 ist auch jedem Nutzdatenpaket 40 ein Synchronisationssymbol 120 vorangestellt, so daß sowohl die entsprechende Teilnehmereinrichtung 10 als auch die Kopfstelle 5 den Paketanfang detektieren kann. Jedem für eine Verbindung genutzten Nutzdatenpaket 40 wird in der Multiplex-/Demultiplex-Einheit 50 mittels der vier Adreßsymbole 125 die Adresse der Teilnehmereinrichtung 10 eingefügt, der das Nutzdatenpaket 40 gemäß den Informationen der ersten Zeitschlitzzuweisungs- und Laufzeitkorrektureinheit 80 zugewiesen ist. Da die von der optischen Netzwerkeinheit 45 kommenden Nutzdaten je nach Umfang in mehrere Nutzdatenpakete 40 aufgeteilt werden müssen, werden die einzelnen Nutzdatenpakete 40 in der Multiplex-/Demultiplex-Einheit 50 außerdem mit vier Zählersymbolen 130 versehen, die es der entsprechenden Teilnehmereinrichtung 10 ermöglichen, zu überprüfen, ob alle Nutzdatenpakete 40 angekommen sind, und gegebenenfalls eine Wiederholung der Datenübertragung zu veranlassen. Die Nutzdaten selbst werden dann in der Multiplex-/Demultiplex-Einheit 50 mittels der Nutzdatensymbole 135 in das entsprechende Nutzdatenpaket 40 eingefügt. In der Kanalanpassungs- und Modulationseinheit 55 werden den Nutzdatenpaketen 40 Korrektursymbole 140 zur Realisierung eines Fehlerschutzes eingefügt und das Signal moduliert. Dabei wird eine 64-Quadraturamplitudenmodulation (QAM) verwendet. Im Frequenzumsetzer 60 wird das so entstandene Datensignal in einen ersten hochfrequenten Frequenzbereich 15 gemäß Figur 4 umgesetzt, dessen Bandbreite 160 7 MHz beträgt. Das hochfrequente QAM-Signal wird dann über den ersten Koppler 65 auf die Breitbandkabelanlage 1 gegeben. Von dort wird es über den zweiten Koppler 85 an die QAM-Empfangseinheit 90 der Teilnehmereinrichtung 10 weitergegeben. In der QAM-Empfangseinheit 90 findet eine Filterung des empfangenen QAM-Signals statt. Im Kanal-Decoder 95 findet eine Demodulation des QAM-Signals in ein Basisband statt. Außerdem wird das Datensignal decodiert und mit Hilfe der Korrektursymbole 140 findet eine Fehlerauswertung statt. In der zweiten Zeitschlitzzuweisungs- und Laufzeitkorrektureinheit 100 werden aus den Steuerdatenpaketen 35 die für die Verbindung zwischen der Kopfstelle 5 und der Teilnehmereinrichtung 10 von der Kopfstelle 5 zugewiesenen Zeitschlitze ermittelt und geprüft, ob die vier Adreßsymbole 125 mit der Adresse der Teilnehmereinrichtung 10 übereinstimmen. Außerdem wird dort anhand der Zählersymbole 130 geprüft, ob alle für die Teilnehmereinrichtung 10 vorgesehenen Nutzdatenpakete 40 auch bei der Teilnehmereinrichtung 10 angekommen sind. Über die Endgeräteschnittstelle 105 werden die Nutzdaten dann nach geeigneter Anpassung an ein angeschlossenes Endgerät, wie zum Beispiel Telefon, Personal Computer oder dergleichen weitergeleitet.

Für die Übertragung in Rückwärtsrichtung von den Teilnehmereinrichtungen 10 zur Kopfstelle 5 werden Pakete in der gleichen Rahmenstruktur wie in Vorwärtsrichtung zeitmultiplex übertragen. Von dem an die Endgeräteschnittstelle 105 angeschlossenen Endgerät werden an die Kopfstelle 5 oder eine andere Teilnehmereinrichtung 10 adressierte Nutzdaten über die Endgeräteschnittstelle 105 der Kanalanpassungs- und Laufzeitkorrektureinheit 110 zugeführt. In Rückwärtsrichtung werden über die Breitbandkabelanlage 1 nur Nutzdatenpakete 40 übertragen. Die Erzeugung dieser Nutzdatenpakete 40 erfolgt in der Kanalanpassungs- und Laufzeitkorrektureinheit 110. Dort werden den Nutzdatenpaketen 40 Korrektursymbole 140 zur Fehlerauswertung in der Kopfstelle 5 beigefügt. Entsprechend der Adressierung der Nutzdaten seitens des Endgerätes werden in der Kanalanpassungs- und Laufzeitkorrektureinheit 110 den gebildeten Nutzdatenpaketen 40 entsprechende Adreßsymbole 125 eingefügt. Jedem Nutzdatenpaket 40 wird dort außerdem ein Synchronisationssymbol 120 vorangestellt. Je nach Umfang der zu übertragenden Nutzdaten werden in der Regel mehrere Nutzdatenpakete 40 benötigt, so daß die Einfügung von Zählersymbolen 130 durch die Kanalanpassungs- und Laufzeitkorrektureinheit 110 in die jeweiligen Nutzdatenpakete 40 durchgeführt wird, so daß in der Kopfstelle 5 geprüft werden kann, ob alle Nutzdatenpakete 40 angekommen sind. Die Nutzdaten selbst werden in der Kanalanpassungs- und Laufzeitkorrektureinheit 110 mittels der Nutzdatensymbole 135 in die Nutzdatenpakete 40 eingefügt. Von der zweiten Zeitschlitzzuweisungs- und Laufzeitkorrektureinheit 100 wird die Kanalanpassungs- und Laufzeitkorrektureinheit 110 darüber informiert, welcher bzw. welche Zeitschlitze bzw. Nutzdatenpakete 40 von der Kofpstelle 5 für die Verbindung zugewiesen wurde bzw. wurden. Aufgrund von unterschiedlichen Leitungslängen der Breitbandkabelanlage 1 zwischen der Kopfstelle 5 und den einzelnen Teilnehmereinrichtungen 10 wird ein Laufzeitausgleich notwendig, das heißt, die Nutzdatenpakete 40 müssen so von den einzelnen Teilnehmereinrichtungen 10 abgeschickt werden, daß sie zum vorgesehenen Zeitpunkt und möglichst ohne Jitter an der Kopfstelle 5 eintreffen. Dieser Laufzeitausgleich wird über eine entsprechende Vorverzerrung in der Kanalanpassungs- und Laufzeitkorrektureinheit 110 realisiert. Die Information über die einzustellende Laufzeitkorrektur erhält die Kanalanpassungs- und Laufzeiteinheit 110 dabei von der zweiten Zeitschlitzzuweisungs- und Laufzeitkorrektureinheit 100. Nur auf diese Weise ist es möglich, die Rahmen 25 für die Übertragung in Vorwärtsrichtung und in Rückwärtsrichtung miteinander zu synchronisieren, so daß die Verarbeitung in der Kopfstelle 5 möglichst vereinfacht ist, ein einheitlicher Takt verwendet und die Kanalkapazität optimal genutzt werden kann. In dem QAM-Modulator 115 wird das so gebildete Signal einer 64 QAM-Modulation unterzogen und in einen zweiten Frequenzbereich 20 der Bandbreite 160 von 7 MHz umgesetzt. Über den zweiten Koppler 85 gelangt das entstandene QAM-Signal auf die Breitbandkabelanlage 1 und von dort zur Kopfstelle 5. Über den ersten Koppler 65 wird das in der Kopfstelle 5 empfangene QAM-Signal an die Frequenzumsetzungs- und Synchronisationseinheit 70 weitergeleitet. Dort findet eine Umsetzung der Frequenz ins Basisband statt. Außerdem werden zur Synchronisation die Synchronisationsymbole 120 der empfangenen Nutzdatenpakete detektiert. In der QAM-Empfangs- und Laufzeitmessungseinheit 75 wird das empfangene QAM-Signal gefiltert, demoduliert, decodiert und einer Fehlerauswertung unterzogen. Enthält das empfangene QAM-Signal eine Bitfolge zur Laufzeitmessung, so wird die Laufzeit des QAM-Signals von der Teilnehmereinrichtung 10 zur Kopfstelle 5 in der QAM-Empfangs- und Laufzeitmessungseinheit 75 ebenfalls ermittelt. Die gemessene Laufzeit wird dann der ersten Zeitschlitzzuweisungs- und Laufzeitkorrektureinheit 80 zugeführt. Die Nutzdaten werden anschließend in der Multiplex-/Demultiplexeinheit 50 auf entsprechende Kanäle 145 aufgeteilt und der optischen Netzwerkeinheit 45 zur Weiterleitung auf den Lichtwellenleiter 150 zugeführt. Je nach Adressierung der Nutzdaten können so entsprechende Teilnehmer über den Lichtwellenleiter 150 erreicht werden. Sind die Nutzdaten jedoch an eine Teilnehmereinrichtung 10 adressiert, die an die Breitbandkabelanlage 1 angeschlossen ist, so werden sie bereits in der Multiplex-/Demultiplexeinheit 50 in eine oder mehrere für die Verbindung der Kopfstelle 5 mit der adressierten Teilnehmereinrichtung 10 vorgesehenen Zeitschlitz bzw. Zeitschlitze des Rahmens 25 in beschriebener Weise eingefügt und an die Kanalanpassungs- und Modulationseinheit 55 zur Weiterverarbeitung weitergeleitet. In der ersten Zeitschlitzzuweisungs- und Laufzeitkorrektureinheit 80 wird außerdem anhand der Zählersymbole 130 ermittelt, ob alle Nutzdatenpakete 40 von der Teilnehmereinrichtung 10 in der Kopfstelle 5 angekommen sind.

Liegt in der Kopfstelle 5 ein Verbindungswunsch vor, einen Datenaustausch mit einer Teilnehmereinrichtung 10 zu realisieren, so wird in der Kopfstelle 5 ein an die Teilnehmereinrichtung 10 adressiertes Steuerdatenpaket 35 erzeugt, das eine Aufforderung zur Laufzeitmessung und die Zuweisung eines oder mehrerer Zeitschlitze für die aufzubauende Verbindung enthält. Das zugewiesene Nutzdatenpaket 40 in Vorwärtsrichtung ist dabei nicht belegt und wird mit Stopfinformation gefüllt. Das Steuerdatenpaket 35 wird von der adressierten Teilnehmereinrichtung 10 empfangen und aufgrund der Adressierung wird der Verbindungswunsch in dieser Teilnehmereinrichtung 10 erkannt. Daraufhin erzeugt die Teilnehmereinrichtung 10 in dem zugewiesenen Zeitschlitz bzw. Paket eine vorgegebene Bitfolge zur Laufzeitmessung und sendet diese Bitfolge an die Kopfstelle 5 zurück. Je nach Leitungslänge zwischen der Kopfstelle 5 und der Teilnehmereinrichtung 10 kommt die Bitfolge im Nutzdatenpaket 40 der Teilnehmereinrichtung 10 nach entsprechender Laufzeit in der Kopfstelle 5 an. Da die Bitfolge auch in der Kopfstelle 5 bekannt ist, stellt die Kopfstelle 5 bei der Abtastung des empfangenen Nutzdatenpaketes 40 die Abweichung der Bitfolge vom Systemtakt fest und ermittelt auf diese Weise die erforderliche Laufzeitkorrektur. In einem weiteren an die Teilnehmereinrichtung 10 adressierten Steuerdatenpaket 35 oder in einem Nutzdatenpaket 40 des zugewiesenen Zeitschlitzes sendet die Kopfstelle 5 die Laufzeitkorrekturinformation an die Teilnehmereinrichtung 10, die daraufhin eine entsprechende Zeitverzögerung einstellen kann. Die Verbindung ist damit aufgebaut und der Austausch der Nutzdaten kann beginnen.

Werden die Steuerdatenpakete 35 nicht zur Ankündigung eines Verbindungswunsches verwendet, so sind sie nicht adressiert und enthalten Informationen darüber, wieviele Nutzdatenpakete 40 im Rahmen 25 benutzt werden. Nicht benutzte Nutzdatenpakete 40 sind dabei nicht belegt und tragen Stopfinformationen. Diese Steuerdatenpakete 35 werden in jeder Teilnehmereinrichtung 10 empfangen. Eine Teilnehmereinrichtung 10 mit Verbindungswunsch ermittelt das erste nicht mehr benutzte Nutzdatenpaket 40 und sendet in diesem eine Verbindungsanforderung an die Kopfstelle 5. Die Kopfstelle 5 wertet alle empfangenen Nutzdatenpakete 40 aus und stößt so auf den Verbindungswunsch der Teilnehmereinrichtung 10, deren Adresse ebenfalls in dem entsprechenden Nutzdatenpaket 40 enthalten ist. Die Kopfstelle 5 sendet daraufhin in bereits beschriebener Weise die Aufforderung zur Laufzeitmessung in einem an die Teilnehmereinrichtung 10 adressierten Steuerdatenpaket 35 zusammen mit der Zeitschlitzzuweisung an die Teilnehmereinrichtung 10.

Liegen in der Kopfstelle 5 gleichzeitig Verbindungswünsche mehrerer Teilnehmereinrichtungen 10 vor, indem mehrere Teilnehmereinrichtungen 10 das erste nicht mehr benutzte Nutzdatenpaket 40 zur Absendung ihres Verbindungswunsches benutzt haben, so überlagern sich diese Verbindungswünsche in der Kopfstelle 5 und die Kopfstelle 5 kann die Adressen der Teilnehmereinrichtungen 10 mit Verbindungswunsch nicht mehr identifizieren. Die Kopfstelle 5 sendet dann mittels Steuerdatenpaketen 35 in einem oder mehreren Rahmen 25 nicht adressierte Aufforderungen zur Wiederholung des Verbindungswunsches, die von allen Teilnehmereinrichtungen 10, die über die Breitbandkabelanlage 1 mit der Kopfstelle 5 verbunden sind, empfangen werden. Nur die Teilnehmereinrichtungen 10 mit Verbindungswunsch erkennen die Wiederholungsaufforderung und senden ihren Verbindungswunsch nach einer jeweils zufälligen Anzahl von Rahmen 25 erneut an die Kopfstelle 5. Dies wird solange wiederholt, bis alle Verbindungswünsche erfüllt sind, das heißt, bis die Verbindungswünsche nicht mehr gleichzeitig in der Kopfstelle 5 eintreffen.

Die Zuweisung der Nutzdatenpakete 40 eines Rahmens 25 erfolgt flexibel in Abhängigkeit von den Anforderungen der einzelnen Nutzer. Jedes Nutzdatenpaket 40 enthält bei einer 64 QAM genau 1920 Bit Information je Rahmen 25. Das sind brutto 80 kBit/s je Kanal 145. Von diesen 80 kBit/s werden 8 kBit/s oder 192 Bit je Nutzdatenpaket 40 für Synchronisation, Adressierung, Zählung und Fehlerschutz verwendet. Die verbleibenden 1728 Bit entsprechen 72 kBit/s und können einen B-Kanal mit 64 kBit/s und einen halben D-Kanal mit 8 kBit/s für den Transport von Informationen und Signalisierungsdaten im ISDN enthalten. Durch Verwendung zweier Kanäle 145 erhält man somit bereits einen ISDN-Basisanschluß mit zwei B-Nutzkanälen und einem D-Signalisierungskanal.

In den Steuerdatenpaketen 35 erfolgt die Zuweisung der Nutzdatenpakete 40 und die Steuerung des Datenaustausches zum Beispiel über Informationen zum Laufzeitausgleich. Dabei kann die Laufzeitkontrolle auch permanent durchgeführt werden, so daß für die Synchronisation eine erhöhte Sicherheit gegeben ist. Sollte in Vor- und/oder in Rückwärtsrichtung für eine Verbindung eine höhere Datenrate benötigt werden, so können auch zwei oder mehr Nutzdatenpakete 40 eines Rahmens 25 einer Verbindung zur Verfügung gestellt werden. Sollten mehr als 432 Nutzdatenpakete 40 pro Rahmen 25 benötigt werden, so ist die Installation eines zweiten Systems beispielsweise in einem Nachbarkanal der Breitbandkabelanlage 1 möglich. So kann gemäß Figur 4 für die Übertragung in Vorwärtsrichtung ein dritter Frequenzbereich 16 mit einer Bandbreite 160 von 7 MHz und für die Übertragung in Rückwärtsrichtung ein vierter Frequenzbereich 21 mit einer Bandbreite 160 von ebenfalls 7 MHz zur Verfügung gestellt werden.

Die Mitteilung eines Verbindungswunsches von einer Teilnehmereinrichtung 10 an die Kopfstelle 5 kann auch mittels eines oder mehrerer Steuerdatenpakete 35 erfolgen, wobei dieser Verbindungswunsch dann in der Kopfstelle 5 durch die Auswertung der empfangenen Steuerdatenpakete 35 erkannt wird.

## Patentansprüche

1. Verfahren zur bidirektionalen Datenübertragung auf einer Breitbandkabelanlage (1) zwischen einer Kopfstelle (5) und mehreren Teilnehmereinrichtungen (10), dadurch gekennzeichnet, daß die Daten in Vorwärtsrichtung von der Kopfstelle (5) zu den Teilnehmereinrichtungen (10) in mindestens einem ersten Frequenzbereich (15) und in Rückwärtsrichtung von den Teilnehmereinrichtungen (10) zur Kopfstelle (5) in mindestens einem zweiten Frequenzbereich (20) in Paketen zeitmultiplex übertragen werden.

2. Verfahren nach Anspruch 1, dadurch gekennzeichnet, daß die Pakete zu Rahmen (25) zusammengefaßt übertragen werden und daß jedem Rahmen (25) ein Synchronisationspaket (30) zur Kennzeichnung des Rahmenanfangs vorangestellt wird.

3. Verfahren nach Anspruch 1 oder 2, dadurch gekennzeichnet, daß in Vorwärtsrichtung Steuerdaten in Steuerdatenpaketen (35) übertragen werden, die Informationen über die den entsprechenden Teilnehmereinrichtungen (10) zugewiesenenen Zeitschlitze und/oder über für die Übertragung in Rückwärtsrichtung von den Teilnehmereinrichtungen (10) einzustellende Zeitverzögerungen enthalten.

4. Verfahren nach Anspruch 1, 2 oder 3, dadurch gekennzeichnet, daß in Rückwärtsrichtung Daten übertragen werden, die eine Anforderung mindestens einer Teilnehmereinrichtung (10) an die Kopfstelle (5) für einen Datenaustausch enthalten.

5. Verfahren nach einem der vorherigen Ansprüche, dadurch gekennzeichnet, daß in Vorwärts- und/oder Rückwärtsrichtung Nutzdatenpakete (40) im entsprechenden Rahmen (25) übertragen werden und daß für eine Verbindung zwischen der Kopfstelle (5) und einer Teilnehmereinrichtung (10) mindestens ein Paket mindestens eines Rahmens (25) zur Verfügung gestellt wird.

6. Verfahren nach einem der vorherigen Ansprüche, dadurch gekennzeichnet, daß für den ersten und den zweiten Frequenzbereich (15, 20) jeweils mindestens ein 7MHz-Kanal verwendet wird und daß in den beiden Frequenzbereichen (15, 20) jeweils 64QAM modulierte Signale übertragen werden.

7. Verfahren nach einem der vorherigen Ansprüche, dadurch gekennzeichnet, daß pro Rahmen (25) ein Synchronisationspaket (30), 17 Steuerdatenpakete (35) und 432 Nutzdatenpakete (40) übertragen werden.

8. Verfahren nach einem der vorherigen Ansprüche, dadurch gekennzeichnet, daß zwischen der Kopfstelle (5) und mindestens einer Teilnehmereinrichtung (10) Nutzkanäle, insbesondere mit einer Datenrate von 64kBit/s und mindestens ein Signalisierungskanal, insbesondere mit einer Datenrate von 16kBit/s eingerichtet werden.
